(19) Europäisches Patentamt
European Patent Office
Office européen des brevets

(11) **EP 3 084 741 B1**

(12) **FASCICULE DE BREVET EUROPEEN**

(45) Date de publication et mention de la délivrance du brevet:
**13.09.2017 Bulletin 2017/37**

(21) Numéro de dépôt: **14812542.0**

(22) Date de dépôt: **16.12.2014**

(51) Int Cl.:
***G08C 17/02*** *(2006.01)*

(86) Numéro de dépôt international:
**PCT/EP2014/078052**

(87) Numéro de publication internationale:
**WO 2015/091542 (25.06.2015 Gazette 2015/25)**

(54) **DISPOSITIF DE COMMANDE A DISTANCE AUTONOME**

AUTONOME FERNBEDIENUNGSVORRICHTUNG

AUTONOMOUS REMOTE CONTROL DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2013 FR 1362716**

(43) Date de publication de la demande:
**26.10.2016 Bulletin 2016/43**

(73) Titulaire: **SOMFY ACTIVITES SA 74300 Cluses (FR)**

(72) Inventeur: **LAMBERSEND, Bruno F-74130 Bonneville (FR)**

(74) Mandataire: **Novaimo ActiTech 8 60 avenue Marie Curie Archamps Technopole 74166 Saint Julien-en-Genevois Cedex (FR)**

(56) Documents cités:
**EP-A2- 2 395 625**

## Description

L'invention concerne un dispositif de commande à distance autonome comprenant un générateur destiné à convertir une énergie lumineuse ou mécanique en énergie électrique.

Un tel dispositif est connu de l'art antérieur. Par exemple, on connaît un moyen d'alimentation autonome par conversion d'une énergie fournie par une source en énergie électrique. La source d'énergie peut être notamment de type électromagnétique (rayonnement solaire) ou de type mécanique (rotation ou vibration d'une structure sous l'effet du vent ou de la pluie). Cette énergie électrique est ensuite stockée dans un moyen de stockage en général physico-chimique comme une batterie d'accumulateurs, ou préférentiellement un supercondensateur, ou un simple condensateur.

Un tel dispositif comprend un moyen d'émission de signaux de communication sans fil par ondes électromagnétiques, par exemple par ondes radioélectriques. Ce moyen d'émission permet au dispositif de communiquer des informations à différents autres dispositifs d'un réseau domotique tels que notamment des actionneurs, des unités de commande et des capteurs. Le dispositif peut éventuellement comprendre des moyens de réception de signaux de communication de manière à réaliser une communication bidirectionnelle entre le dispositif et d'autres dispositifs du réseau.

Un tel dispositif est par exemple décrit dans la publication EP 2 395 625.

Un problème posé avec ce type de dispositif est son utilisation après une longue période sans exposition de son générateur photovoltaïque à un rayonnement lumineux ou sans apport d'énergie mécanique. En effet, dans une telle situation, le moyen de stockage d'énergie électrique est en général vide et le dispositif n'est plus opérationnel.

Les moyens de conversion d'énergie et de stockage sont généralement dimensionnés en fonction des contraintes normales d'utilisation. Si par exemple le dispositif est alimenté par un panneau photovoltaïque, le moyen de stockage doit être adapté à une autonomie de longue durée, de manière à permettre un bon fonctionnement même après une longue période de non exposition. Typiquement, une période d'autonomie complète de 18 heures est requise pour une telle application. Cette autonomie nécessite une grande capacité de stockage d'énergie, et donc un temps de charge long, pendant lequel le dispositif n'est pas fonctionnel.

Pour remédier un tel problème, on connaît un dispositif comprenant un deux panneaux photovoltaïques de caractéristiques différentes, notamment de puissances différentes, chacun de ces panneaux alimentant un élément de stockage d'énergie distinct. Les éléments ont des capacités de stockage différentes. Ainsi, l'élément de faible capacité est vite chargé et peut donc rapidement alimenter un circuit électrique prioritaire du dispositif. Toutefois, une telle architecture est complexe et coûteuse.

Le but de l'invention est de fournir un dispositif de commande à distance permettant de résoudre les inconvénients et d'améliorer les dispositifs autonomes connus de l'art antérieur. L'invention propose un dispositif de commande de structure simple et qui permette l'émission de quelques signaux de communication peu de temps après son exposition à un rayonnement lumineux, même après une longue période préalable sans exposition à un rayonnement lumineux, ou après un faible apport en énergie mécanique.

Selon l'invention, le dispositif de commande à distance comprend un générateur destiné à convertir une énergie lumineuse ou mécanique en énergie électrique, un émetteur sans fil pouvant envoyer des messages à un récepteur distant, un premier élément de stockage d'énergie électrique connecté au générateur d'énergie et destiné à être chargé à partir de l'énergie électrique générée par le générateur pour alimenter l'émetteur sans fil dans un premier mode de fonctionnement du dispositif de commande et un deuxième élément de stockage d'énergie électrique destiné à alimenter l'émetteur sans fil dans un deuxième mode de fonctionnement. Le deuxième élément de stockage d'énergie électrique est connecté au générateur via un montage parallèle d'une première résistance et d'une première diode, la cathode de la première diode étant reliée à la borne positive du générateur.

La capacité maximale de stockage du premier élément de stockage d'énergie électrique peut être n fois inférieure à la capacité maximale de stockage du deuxième élément de stockage d'énergie électrique, avec n>100, voire n>1000.

Le courant de charge du premier élément de stockage peut être au moins k fois supérieur au courant circulant dans la branche comprenant l'ensemble série constitué par la première résistance et le deuxième élément de stockage, avec k>2, voire k>10.

Le dispositif de commande peut comprendre un récepteur sans fil apte à recevoir des messages.

Le deuxième élément de stockage peut comprendre un supercondensateur et/ou une batterie rechargeable.

Le dessin annexé représente, à titre d'exemple, un mode de réalisation d'un dispositif de commande à distance autonome selon l'invention.

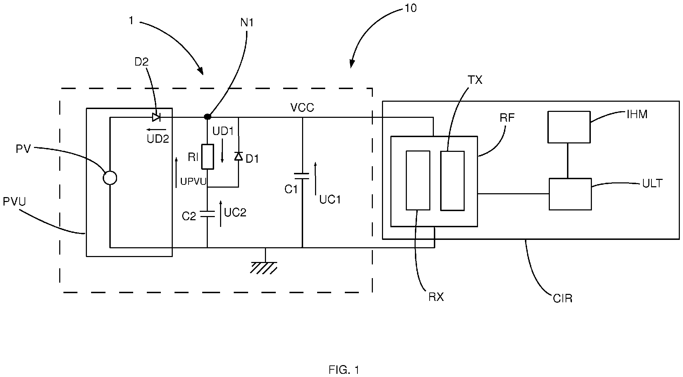

La figure 1 est un schéma électrique d'un mode de réalisation d'un dispositif selon l'invention.

Un mode de réalisation préféré d'un dispositif 10 de commande à distance selon l'invention est décrit ci-après en référence à la figure 1.

Le dispositif comprend un module d'alimentation autonome 1 et un circuit électronique CIR comprenant un circuit RF de télécommunication. Le module d'alimentation autonome permet d'alimenter électriquement le circuit électronique.

Le circuit de télécommunication comprend un émetteur TX de signaux de télécommunication et, éventuellement, un récepteur RX de signaux de télécommunication. L'émetteur est de préférence un émetteur sans fil, notamment un émetteur de signaux électromagnétiques, notamment de signaux radioélectriques. L'émetteur permet de transmettre des ordres de commande et/ou des messages et/ou des informations à des dispositifs situés à proximité, notamment à des dispositifs faisant partie du même réseau, notamment du même réseau domotique. Le récepteur est de préférence un récepteur sans fil, notamment un récepteur de signaux électromagnétiques, notamment de signaux radioélectriques. Le récepteur permet de recevoir des ordres de commande et/ou des messages et/ou des informations de dispositifs situés à proximité, notamment de dispositifs faisant partie du même réseau, notamment du même réseau domotique.

Le circuit électronique CIR comprend aussi une interface homme-machine IHM. Elle comprend elle-même un élément de saisie, notamment un clavier ou au moins un bouton de commande et, éventuellement, un élément de signalisation, notamment un écran ou au moins un indicateur lumineux. L'interface homme-machine peut comprendre un écran tactile. Le circuit électronique comprend encore une unité logique de traitement ULT comme un microprocesseur ou un microcontrôleur.

Le module d'alimentation autonome comprend un générateur PVU destiné à convertir une énergie lumineuse en énergie électrique, un premier élément C1 de stockage d'énergie électrique et un deuxième élément C2 de stockage d'énergie électrique. Le générateur PVU peut comprendre un élément générateur PV et une diode D2 ayant pour fonction d'éviter que les premiers et deuxième éléments de stockage puissent se décharger au travers du générateur. Alternativement, cette diode peut être présente en tant que composant discret. Notamment, cette diode peut être prévue au niveau de la borne positive du générateur. Elle peut aussi être prévue au niveau de la borne négative du générateur. Dans la suite de ce document, on désigne, par « générateur PVU », un générateur intégrant une telle diode D2.

Alternativement, l'élément générateur PV peut être de type chargeur à induction (« inductive charging » ou « wireless charging » en anglais), destiné à convertir une énergie électromagnétique en énergie électrique.

Le premier élément C1 de stockage d'énergie électrique est connecté au générateur d'énergie PVU et destiné à être chargé à partir de l'énergie électrique générée par le générateur pour alimenter au moins l'émetteur TX de l'élément de télécommunication dans un premier mode de fonctionnement du dispositif de commande, dit mode de fonctionnement de courte durée.

Le deuxième élément C2 de stockage d'énergie électrique est destiné à alimenter l'émetteur TX dans un deuxième mode de fonctionnement, dit mode de fonctionnement de longue durée. Cet élément de stockage peut être un supercondensateur, c'est-à-dire est un condensateur de technique particulière permettant d'obtenir une densité de puissance et une densité d'énergie intermédiaires entre celles des piles ou batteries et celles des condensateurs électrolytiques classiques. Ce type de composant permet donc de stocker une quantité d'énergie intermédiaire entre celles des deux technologies de stockage que sont les batteries et les condensateurs et de la restituer plus rapidement qu'une batterie ou une pile.

Alternativement, le deuxième élément de stockage peut être une batterie. Le deuxième élément de stockage C2 d'énergie électrique est connecté au générateur PVU via un montage parallèle d'une première résistance R1 et d'une première diode D1. La cathode de la première diode est reliée à la borne positive du générateur.

Le générateur peut être un panneau photovoltaïque comme un panneau de photopiles silicium. Le générateur est par exemple capable de générer un courant de 20 μA à 100 μA sous une tension de 3 à 5 V sous un rayonnement lumineux de 200 lux. La tension délivrée par le générateur peut être ajustée en modifiant le nombre de cellules photovoltaïques en fonction des besoins de l'application. Le courant peut être ajusté en modifiant la surface des cellules photovoltaïques.

Le premier élément de stockage d'énergie C1 et le deuxième élément de stockage d'énergie C2 ont des capacités différentes, notamment leurs valeurs peuvent différer dans un rapport 100, voir 1000. Ces différences de capacité impliquent des différences importantes de temps de charge sous un courant de même intensité.

Le premier élément de stockage d'énergie C1 est par exemple un condensateur. Sa capacité est typiquement comprise entre 50 μF et 2 mF. Par exemple, sa capacité peut valoir 220 μF. Le premier élément de stockage est par exemple chargé à une tension de 3 V à 5 V. Le rôle du premier élément de stockage C1 est de stocker rapidement une énergie électrique sous une tension suffisante pour permettre son utilisation par le circuit électronique, notamment par l'émetteur Tx du circuit de télécommunication. De préférence, l'énergie stockée dans le premier élément de stockage et utilisable par le circuit doit être suffisante pour permettre à l'émetteur d'émettre quelques trames, notamment une, deux, trois ou quatre trames d'un signal de commande ou d'information. Typiquement, chaque trame dure environ 100 ms et la tension du premier élément de stockage peut être redescendue aux environs de 2 V après l'émission de ces quelques trames.

Le deuxième élément de stockage d'énergie C2 est par exemple un supercondensateur. Sa capacité est typiquement comprise entre 1 mF et 2 F. Par exemple, sa capacité peut valoir 330 mF.

Du fait de la présence de la résistance R1, pendant le temps de charge du premier élément de stockage, la tension aux bornes du deuxième élément de stockage reste sensiblement inchangée. Notamment, elle reste sensiblement nulle si elle était préalablement nulle.

En effet, le courant délivré par le générateur PVU se divise dans le noeud N1 entre le courant de charge du premier élément de stockage C1 et le courant circulant dans la branche constituée par la résistance R1 en parallèle avec la diode D1. Pendant la phase de charge, la diode D1 est bloquée, le courant étant par conséquent divisé entre la résistance R1 et l'élément de charge C1. Du fait de la présence de cette résistance R1 dans la première branche comprenant le deuxième élément de stockage d'énergie C2, le courant va préférentiellement circuler dans la branche comprenant le premier élément de stockage d'énergie C1 et donc va préférentiellement ou prioritairement charger ce dernier.

Le choix de la valeur de la résistance R1 dépend du courant fourni par le générateur PVU, de la valeur choisie pour le premier élément de stockage C1 et du temps souhaité pour atteindre l'état chargé pour ce dernier, autrement dit le temps nécessaire pour permettre le fonctionnement de courte durée.

Ainsi, on peut calculer, selon des méthodes connues d'analyse du régime transitoire, le courant nécessaire à la charge du premier élément de stockage C1 dans un temps prédéterminé. Comme expliqué, le courant délivré par le générateur PVU se divise entre les deux branches comprenant respectivement le premier élément de charge C1 et la résistance R1. Le courant circulant par la résistance R1 est donc la différence entre le courant délivré par le générateur PVU et le courant de charge du premier élément de charge C1. Connaissant la tension aux bornes du générateur PVU, on peut déterminer la valeur de la résistance R1. Cette valeur est typiquement de l'ordre de 10 k$\Omega$, voire de l'ordre de 100 k$\Omega$.

Dans un mode préféré de réalisation, le courant de charge du premier élément de stockage C1 est au moins k fois supérieur au courant circulant dans la branche comprenant de l'ensemble série constitué par la première résistance R1 et le deuxième élément de stockage C2, avec k>2, voire k>10. Il s'agit ici des valeurs moyennes des courants dans les branches considérées. Les valeurs moyennes sont calculées pour la période de charge complète du premier élément de stockage C1 depuis son état complètement déchargé.

Lorsqu'on utilise l'énergie du deuxième élément de stockage C2 pour alimenter le circuit CIR et en particulier l'émetteur TX, la diode D1 se trouve en conduction, présentant une faible résistance connectée en parallèle à la résistance R1, et créant ainsi un chemin de contournement de cette résistance R1 (bypass en anglais) pour le courant délivré par le deuxième élément de stockage C2.

Dans un exemple de réalisation, un deuxième élément de stockage de 330 mF peut permettre d'assurer une alimentation autonome du circuit CIR pendant 5 jours dans l'hypothèse d'une consommation nominale.

On remarque qu'une telle structure d'alimentation est très simple et donc très fiable. En particulier, les différents composants sont connectés en permanence les uns aux autres sans interrupteur commandé et donc sans circuit de commande d'un tel interrupteur commandé. La logique de charge des éléments de stockage est directement déterminée par le rapport des courants de charge. Les commutations de la diode D1 permettent automatiquement l'utilisation du premier ou du deuxième élément de stockage.

Un mode de fonctionnement d'un mode de réalisation d'un dispositif de commande à distance est décrit ci-après.

Dans un premier état, on suppose que le dispositif de commande est placé dans le noir et que les premier et deuxième éléments de stockage sont déchargés. Dans cette situation, l'intensité du courant délivré par le générateur est nulle. Les tensions aux bornes des premier et deuxième éléments de stockage sont nulles.

Dans un deuxième état, on suppose qu'on expose le dispositif à un rayonnement lumineux. Le générateur produit donc un courant électrique d'intensité i qui va principalement charger le premier élément de stockage C1 et très minoritairement charger le deuxième élément de stockage C2 du fait de la présence de la résistance R1. Il s'ensuit une charge rapide du premier élément de stockage C1 et une charge lente du deuxième élément de stockage C2. Le but de l'invention est atteint car la charge rapide du premier élément de stockage C1 va rapidement permettre d'alimenter le circuit électronique et en particulier d'émettre quelques trames comme vu plus haut. Dans ce deuxième état, on a

$$UC1 = UC2 + i \times R1 \text{ d'où } UC1 > UC2.$$

Dans un troisième état, on suppose que le circuit électronique est alimenté pour envoyer quelques trames à l'aide de l'émetteur. L'énergie est donc prélevée au niveau du premier élément de stockage. La tension du premier élément de stockage passe ainsi rapidement d'environ 4 V à environ 2 V. Pendant cette phase, on suppose que le premier élément de stockage doit fournir un courant d'environ 10 à 15 mA pendant 100 ms. Le dispositif se trouve dans le premier mode de fonctionnement, de courte durée.

Dans un quatrième état, on suppose que le dispositif continue à être exposé au rayonnement lumineux et que les éléments de stockage continuent de se charger, le deuxième élément de stockage C2 mettant beaucoup plus de temps à se charger que le premier élément de stockage C1.

Dans un cinquième état, on suppose que le dispositif a atteint un régime établi. Cet état est l'état de fonctionnement « longue durée », dans lequel le circuit CIR est alimenté par le deuxième élément de stockage C2. La diode D1 est à l'état passant, la tension de polarisation directe à ses bornes étant UD1.

On a UC1=UC2+UD1, par conséquent UC2 = UC1 -UD1 et donc la tension aux bornes du deuxième élément de stockage, UC2, est inférieure à la tension aux bornes du premier élément de stockage, UC1. Ainsi, le courant délivré par le deuxième sert uniquement à alimenter le circuit électronique CIR et ne peut pas servir à charger le premier élément de stockage.

Par exemple, dans cet état, même en l'absence d'éclairement, environ 150 trames peuvent être émises par l'émetteur. Le dispositif se trouve dans le deuxième mode de fonctionnement.

Le dispositif de commande selon l'invention permet une mise en condition fonctionnelle extrêmement rapide du dispositif. La description se réfère à un dispositif dont la source d'énergie est lumineuse. Cependant, l'unité photovoltaïque PVU décrite peut être remplacer par tout transducteur susceptible de transformer une énergie non électrique en énergie électrique tel que par exemple un microgénérateur électromagnétique entraîné par un moulinet d'anémomètre ou un élément piézoélectrique convertissant en électricité les vibrations de la structure sur laquelle il est monté.

Dans le cas où les premier et deuxième éléments sont des condensateurs comme décrit plus haut, on entend par capacité de stockage des éléments, leur capacité exprimée en Farad.

Les premier et deuxième éléments peuvent également consister en des batteries d'accumulateurs. Dans ce cas, on entend par capacité de stockage des éléments, leur charge exprimée en Ampère heure.

L'un des éléments peut consister en un condensateur et l'autre peut consister en une batterie d'accumulateurs. Dans ce cas, on entend par capacité de stockage des éléments, les énergies stockées dans ces éléments lors du fonctionnement du dispositif.

Comme évoqué précédemment, le dispositif de commande à distance comprend un émetteur TX de signaux de télécommunication, notamment un émetteur de signaux électromagnétiques, notamment de signaux radioélectriques. L'émetteur permet de transmettre des ordres de commande et/ou des messages et/ou des informations à des dispositifs situés à proximité, notamment à des dispositifs faisant partie du même réseau, notamment du même réseau domotique. Dès lors, le dispositif de commande peut être de différentes natures. Il peut notamment être un capteur ou une balise radio.

Dans un mode de réalisation préféré, le dispositif de commande est un dispositif émettant des ordres de commande à destination d'autres dispositifs faisant partie du même réseau.

L'invention peut aussi être appliquée à tout dispositif de commande à distance comprenant un afficheur, en particulier un afficheur à technologie de papier électronique « e-paper » ou « e-ink » en anglais. Un tel afficheur permet de présenter à un utilisateur des informations, notamment des paramètres environnants, concernant les dispositifs faisant partie du même réseau domotique, en vue d'une commande à distance de ces dispositifs par l'utilisateur.

## Revendications

1. Dispositif de commande à distance comprenant un générateur (PVU) destiné à convertir une énergie lumineuse ou mécanique en énergie électrique, un émetteur sans fil (RF) pouvant envoyer des messages à un récepteur distant, un premier élément (C1) de stockage d'énergie électrique connecté au générateur d'énergie (PVU) et destiné à être chargé à partir de l'énergie électrique générée par le générateur (PVU), pour alimenter l'émetteur sans fil (RF) dans un premier mode de fonctionnement du dispositif de commande et un deuxième élément (C2) de stockage d'énergie électrique destiné à alimenter l'émetteur sans fil (RF) dans un deuxième mode de fonctionnement, le dispositif de commande étant **caractérisé en ce que** le deuxième élément de stockage d'énergie électrique est connecté au générateur (PVU) via un montage parallèle d'une première résistance (R1) et d'une première diode (D1), la cathode de la première diode étant reliée à la borne positive du générateur (PVU).

2. Dispositif de commande selon la revendication 1, **caractérisé en ce que** la capacité maximale de stockage (Q1) du premier élément de stockage d'énergie électrique (C1) est n fois inférieure à la capacité maximale de stockage (Q2) du deuxième élément de stockage d'énergie électrique (C2), avec n>100, voire n>1000.

3. Dispositif de commande selon l'une des revendications précédentes, **caractérisé en ce que** le courant de charge du premier élément de stockage (C1) est au moins k fois supérieur au courant circulant dans la branche comprenant l'ensemble série constitué par la première résistance (R1) et le deuxième élément de stockage (C2), avec k>2, voire k>10.

4. Dispositif de commande selon l'une des revendications précédentes, **caractérisé en ce qu'**il comprend un récepteur sans fil (RX) apte à recevoir des messages.

5. Dispositif de commande selon l'une des revendications précédentes, **caractérisé en ce que** le deuxième élément de stockage (C2) comprend un supercondensateur et/ou une batterie rechargeable.

## Patentansprüche

1. Fernsteuervorrichtung, die Folgendes umfasst: einen Generator (PVU), der dazu bestimmt ist, Lichtenergie oder mechanische Energie in elektrische Energie umzusetzen, einen drahtlosen Sender (RF), der Nachrichten an einen entfernten Empfänger schicken kann, ein erstes Element (C1) zum Speichern von elektrischer Energie, das mit dem Energiegenerator (PVU) verbunden ist und dazu bestimmt ist, mit elektrischer Energie, die durch den Generator (PVU) erzeugt wird, geladen zu werden, um den drahtlosen Sender (RF) in einer ersten Betriebsart der Steuervorrichtung zu versorgen, und ein zweites Element (C2) zum Speichern von elektrischer Energie, das dazu bestimmt ist, den drahtlosen Sender (RF) in einer zweiten Betriebsart zu versorgen, wobei die Steuervorrichtung **dadurch gekennzeichnet ist, dass** das zweite Element zum Speichern von elektrischer Energie mit dem Generator (PVU) über eine Parallelschaltung aus einem ersten Widerstand (R1) und einer ersten Diode (D1) verbunden ist, wobei die Katode der ersten Diode mit dem positiven Anschluss des Generators (PVU) verbunden ist.

**2.** Steuervorrichtung nach Anspruch 1, **dadurch gekennzeichnet, dass** die maximale Speicherkapazität (Q1) des ersten Elements (C1) zum Speichern von elektrischer Energie n-mal kleiner als die maximale Speicherkapazität (Q2) des zweiten Elements (C2) zum Speichern von elektrischer Energie ist, wobei n > 100 oder sogar n > 1000 ist.

**3.** Steuervorrichtung nach einem der vorhergehenden Ansprüche, **dadurch gekennzeichnet, dass** der Ladestrom des ersten Speicherelements (C1) wenigstens k-mal größer als der Strom ist, der in dem Zweig fließt, der die Reihenschaltung enthält, die durch den ersten Widerstand (R1) und das zweite Speicherelement (C2) gebildet ist, wobei k > 2 oder sogar k > 10 ist.

**4.** Steuervorrichtung nach einem der vorhergehenden Ansprüche, **dadurch gekennzeichnet, dass** sie einen drahtlosen Empfänger (RX) umfasst, der Nachrichten empfangen kann.

**5.** Steuervorrichtung nach einem der vorhergehenden Ansprüche, **dadurch gekennzeichnet, dass** das zweite Speicherelement (C2) einen Superkondensator und/oder eine wiederaufladbare Batterie umfasst.

**Claims**

**1.** Remote control device comprising a generator (PVU) that is intended to convert light or mechanical energy to electrical energy, a wireless transmitter (RF) that is able to send messages to a remote receiver, a first electrical energy storage element (C1) that is connected to the energy generator (PVU) and is intended to be charged with the electrical energy generated by the generator (PVU) in order to supply power to the wireless transmitter (RF) in a first operating mode of the control device, and a second electrical energy storage element (C2) that is intended to supply power to the wireless transmitter (RF) in a second operating mode, the control device being **characterized in that** the second electrical energy storage element is connected to the generator (PVU) via parallel connection of a first resistor (R1) and a first diode (D1), the cathode of the first diode being connected to the positive terminal of the generator (PVU).

**2.** Control device according to Claim 1, **characterized in that** the maximum storage capacity (Q1) of the first electrical energy storage element (C1) is n times smaller than the maximum storage capacity (Q2) of the second electrical energy storage element (C2), where n > 100, or even n > 1000.

**3.** Control device according to one of the preceding claims, **characterized in that** the load current of the first storage element (C1) is at least k times larger than the current flowing in the branch comprising the series assembly formed by the first resistor (R1) and the second storage element (C2), where k > 2, or even k > 10.

**4.** Control device according to one of the preceding claims, **characterized in that** it comprises a wireless receiver (RX) that is capable of receiving messages.

**5.** Control device according to one of the preceding claims, **characterized in that** the second storage element (C2) comprises a supercapacitor and/or a rechargeable battery.

FIG. 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2395625 A